Europäisches Patentamt

European Patent Office

Office européen des brevets

(11) Numéro de publication: **0 362 451 B1**

# FASCICULE DE BREVET EUROPEEN

(45) Date de publication de fascicule du brevet: **17.06.92** (51) Int. Cl.[5]: **F16H 7/12**

(21) Numéro de dépôt: **88402651.9**

(22) Date de dépôt: **21.10.88**

(54) **Dispositif de compensation de dilatation thermique sur galet tendeur de transmission par lien souple ou articulé.**

(30) Priorité: **05.10.88 FR 8813147**

(43) Date de publication de la demande:
**11.04.90 Bulletin 90/15**

(45) Mention de la délivrance du brevet:
**17.06.92 Bulletin 92/25**

(84) Etats contractants désignés:
**AT BE CH DE ES FR GB GR IT LI LU NL SE**

(56) Documents cités:
**DE-A- 2 535 676**
**DE-B- 1 072 041**
**FR-A- 2 320 470**
**FR-A- 2 510 217**

**PATENT ABSTRACTS OF JAPAN, vol. 11, no. 98 (M-575)[2545], 27 mars 1987; & JP-A-61 248 952 (MAZDA MOTOR CORP.) 06-11-1986**

(73) Titulaire: **CAOUTCHOUC MANUFACTURE ET PLASTIOUES**
**143bis, rue Yves le Coz**
**F-78005 Versailles(FR)**

(72) Inventeur: **De Guillebon, Hubert**
**122 bis, Avenue de Verdun**
**F-58300 Decize(FR)**

## Description

L'invention est du domaine des transmissions par lien souple ou articulé, mais plus spécialement les transmissions synchrones par courroie dentée, transmettant un mouvement de rotation d'un axe à un autre axe parallèle, avec indexation impérative, telles qu'on en rencontre pour la commande d'arbres à cames en tête, dans les moteurs à combustion interne de technique moderne.

La disposition d'un arbre à cames (ou de deux) en tête du bloc cylindre sur les moteurs thermiques modernes nécessite une transmission entre des poulies à dentures de rapport un demi. Une telle transmission est parfois réalisée par une chaîne de Galles lubrifiée ou, aujourd'hui, le plus souvent, par une courroie synchrone sous un carter sec étanche. Cette technique qui nécessite l'indexation des mouvements des poulies conduit à utiliser, pour l'armature des courroies, des matériaux à faible élasticité, et, préférentiellement, le câblé de fibres de verre noyé dans une composition élastomérique. Les dentures de la courroie synchrone sont moulées dans ladite composition élastomérique.

Les conditions d'emploi vont, depuis le démarrage aux plus basses températures rencontrées telles que - 35°C, jusqu'aux températures permanentes sous le carter de protection, qui peuvent se stabiliser à 110°C en service, et même dépasser cette valeur lors d'un arrêt après un service intensif. Elles nécessitent, pour un bon fonctionnement, une tension modérée de la courroie, par exemple, pour un moteur 4 cylindres usuel, une valeur de 18 daN par brin, aux températures courantes.

Cette tension est accrue, d'une façon qui pourrait porter préjudice à la durée de vie de la courroie, par la dilatation thermique de l'entraxe et du diamètre des pignons, lorsque le moteur est porté à une température de 110°C. Un exemple de tension, constatée sur moteur, est de 54 daN par brin sur une courroie dont le développement est voisin d'un mètre. Le même exemple de moteur voit la tension de la courroie abaissée à 3,5 daN aux plus basses températures de démarrage.

Cette chute de tension, cumulée à l'effet des couples résistants accrus par la viscosité de l'huile, peut provoquer, dans certains cas, un saut de dent dynamique, destructif pour certains éléments du moteur.

Le principe des courroies synchrones à entraxe fixe accepte l'usage d'un galet tendeur portant sur l'un des brins, le plus souvent sur le dos lisse de la courroie, pour établir ladite tension au montage et lors de l'entretien. Un montage par tension élastique permanente de ce dispositif s'avère généralement difficile et coûteux à réaliser dans un usage sur moteur thermique. Dans ce cas, en effet, le cycle moteur est par définition pulsatoire et l'arbre mené est également caractérisé par des résistances pulsatoires dues aux levées de soupapes. L'examen des systèmes masse-ressort fait toujours apparaître un régime de moteur hautement résonnant accompagné de bruits et de sollicitations de fatigue pulsatoire élevées.

Des dispositifs de tendeur élastique, avec un amortissement incorporé, sont décrits dans les brevets DE 3.528.442 de Daimler-Benz, EP 0.243.237 de Hutchinson et EP 0.188.077 de Litens Automotive; mais l'application à l'arbre à cames en tête reste difficile à mettre en oeuvre et de réalisation coûteuse.

Les constructeurs de tels moteurs sont donc condamnés à monter les courroies à entraxe fixe, ou, plus commodément, avec un galet tendeur bloqué après réglage. Une compensation des variations d'entraxe sous l'effet de la température est parfois prévue. Pour des machines à laver à carter et à tambour non métalliques, un dispositif rustique est décrit dans le brevet FR 2.558.496 de Esswein S.A. Il opère par le jeu de bras de leviers à dilatation différentielle agissant sur des poulies en porte à faux. Pour une transmission par courroie crantée, le parallèlisme des axes devient plus exigeant, et le brevet FR 2.510.217 de Piaggio prévoit un dispositif dit régulateur, jouant par un bras de levier approprié entre la dilatation du bloc-cylindre en alliage d'aluminium et une tige de compensation réalisée en acier.

Dans ce dispositif, la tension est d'abord établie par un ressort agissant sur un bras de levier; une tige d'acier en butée limite l'effort exercé par le ressort sur la courroie, lorsque la température du bloc moteur s'élève, à condition que la température de la tige d'acier évolue en fonction de la température du bloc moteur.

Dans ledit brevet FR 2.510.217, il n'est fait état ni du fonctionnement aux très basses températures où la détension de la courroie semble compensée par le seul ressort, ni des états transitoires - où le bloc moteur atteint des températures élevées beaucoup plus rapidement que la tige de compensation - l'ensemble se stabilisant quelques minutes plus tard. Une chute de tension importante de la courroie, pendant ces états transitoires, serait susceptible de provoquer un saut de dent dynamique de la courroie synchrone.

L'invention proposée tend à porter remède aux inconvénients présentés par les dispositifs de l'art antérieur, particulièrement dans les circonstances transitoires où les matériaux sont soumis à des températures différentes. La compensation de la dilatation thermique, théoriquement rigoureuse, est possible si les deux matériaux (ou l'ensemble pondéré de plusieurs) ont des coefficients de dilatation thermique nettement différents, en particulier si le plus faible desdits coefficients thermiques est voisin de zéro. C'est ainsi que l'invention met à profit les propriétés particulières d'un alliage fer-nickel dénommé Invar.

Les coefficients de dilatation thermique des matériaux concernés par le dispositif de transmission décrit, ont, pour ordre de grandeur :

$23.10^{-6}$/degré pour les alliages légers,

$11.10^{-6}$ degré pour les aciers ou fontes,

$05.10^{-6}$/degré pour les câblés de verre,

C'est donc une valeur différentielle de coefficient de dilatation thermique de $18.10^{-6}$/degré pour un bloc moteur en aluminium à poulies en aluminium qui devra être compensée par une valeur différentielle de coefficient de dilatation thermique de $12.10^{-6}$/degré entre l'aluminium et une tige en acier, comme décrit dans le brevet FR 2.510.217.

A géométrie égale, l'effet de rétablissement de la tension de la courroie nécessite un déplacement du galet qui agit sur la flèche du brin de la courroie, en fonction des variations du périmètre de la courroie, périmètre que l'on prendra pour unité dans ce premier cas cité dans le brevet FR 2.510.217.

Or, les réalisations pratiques auraient le plus grand intérêt à faire appel à un matériau à plus faible coefficient de dilatation thermique que l'acier, par exemple l'Invar, alliage fer-nickel à dilatation limitée, dont les variétés les plus usuelles présentent un coefficient de dilatation de $1,2.10^{-6}$/degré - et des qualités supérieures (écroui-étuvé), atteignent un coefficient de dilatation thermique de $0,5.10^{-6}$/ degré.

Pour le bloc moteur précité, la valeur différentielle de coefficients de dilatation thermique de $18.10^{-6}$/degré pourra être compensée par une dilatation thermique différentielle de $21,8.10^{-6}$/degré entre l'aluminium et une tige Invar, ce qui permet - à géométrie égale - de diviser par un rapport 1,8 la longueur nécessaire de la tige, permettant des dimensionnements plus aisés à réaliser.

Mais, sourtout dans le cas d'un bloc moteur en matériaux ferreux, la dilatation thermique différentielle devient $6.10^{-6}$/degré sur l'entraxe et est alors facile à compenser par dilatation thermique différentielle de $9,8.10^{-6}$/degré entre l'entraxe et une tige en Invar, ce qui divise par 2,5 la longueur nécessaire de la tige par rapport au premier exemple. Dans ce dernier cas, la compensation n'était pas jusqu'à présent nécessaire, puisque de valeur absolue trois fois plus faible que dans le cas cité dans le brevet FR 2.510.217.

Cependant, dans l'un et l'autre cas, la température que présente un barreau d'Invar plutôt qu'un barreau d'acier a des effets géométriques d'importance 10 fois plus faible pour le premier, de 20 fois plus faible pour le second, sur la dilatation thermique différentielle. Son usage permet une précision géométrique beaucoup plus élevée, - même en régime transitoire - évitant la chute de tension de la courroie et les risques afférents.

En régime transitoire, où la variation de température du barreau compensateur est retardée dans le temps, tout se passe comme si le coefficient de dilatation thermique de ce dernier était nul et comme si la dilatation thermique différentielle apparente, - au lieu de $21,8.10^{-6}$/degré - était portée à $23.10^{-6}$/degré, pour un bloc moteur en aluminium. Même pour un bloc en alliage ferreux, ce coefficient passe de $9,8.10^{-6}$/degré à $11.10^{-6}$/degré. La variation thermique relative demeure faible, mais permet en tout cas de surcompenser la différence entre les valeurs citées dans chacun des cas par le choix des bras de levier, pour que les régimes transitoires soient mieux traités encore que les régimes stabilisés. Il apparait inutile de rechercher les variétés d'Invar les plus coûteuses à coefficient de dilatation thermique encore plus faible, puisque ce procédé permet une compensation qui réduit les variations de tension induites de la courroie dans un rapport supérieur à 10 pour un bloc en acier ou fonte, et dans un rapport supérieur à 20 pour un bloc en alliage léger - ce rapport étant jugé par comparaison à la technologie actuelle dans laquelle ne s'applique pas encore de compensation des variations thermiques.

L'invention consiste donc dans un dispositif de compensation de la dilatation thermique sur un galet tendeur de transmission par lien souple ou articulé comme défini dans les revendications 1 et 2 dont les éléments décrits dans les préambules sont connus du document FR-A-2 510 217.

L'invention et ses variantes seront mieux comprises à la lecture de la description accompagnant les dessins relatifs à un exemple non limitatif de transmission par courroie de distribution d'un moteur à combustion interne à arbre à cames en tête, dans lesquels :

- la figure 1 représente une vue générale d'une transmission de distribution par courroie dentée
- la figure 2 détaille le levier porteur du galet tendeur de ladite courroie
- la figure 3 représente une variante géométrique du levier porteur du galet.

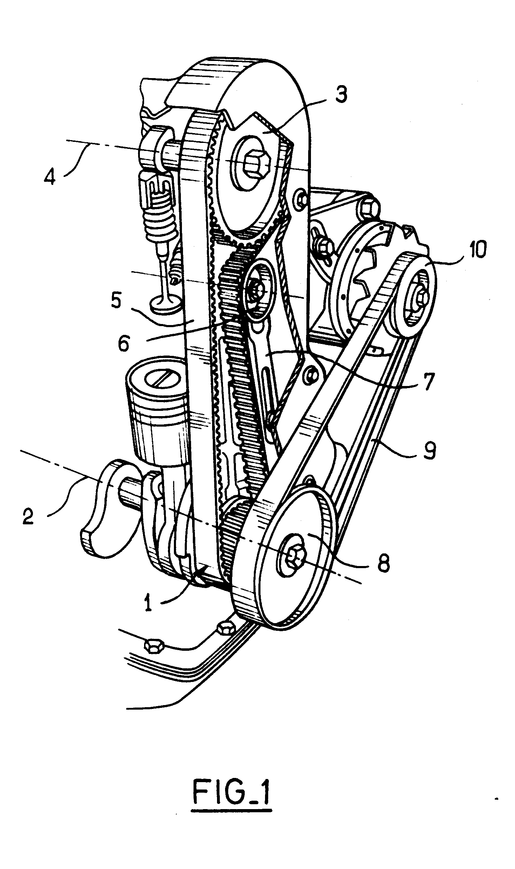

La figure 1 est une vue perspective de la transmission telle qu'elle se présente sur la face avant d'un moteur thermique lorsqu'est enlevé le carter de protection de celle-ci. Une poulie menante (1) fixée sur l'axe de vilebrequin (2) entraîne à vitesse moitié par la poulie menée (3) l'arbre à cames monté sur l'axe parallèle (4).

La courroie crantée (5) qui entoure lesdites poulies est tendue sur le brin entraînant au moyen d'un galet lisse (6), d'axe maintenu parallèle à ceux des poulies, qui est en appui sur le dos lisse de la courroie synchrone munie de dentures conjuguées à celle des poulies (1) et (3).

Le palier de ce galet (6) est fixé de manière rigide , usuellement par des boutonnières de réglage, sur le carter au moyen d'un levier schématisé en (7) qui fait l'objet de l'invention.

Les mouvements de cette cinématique risquant d'être pulsatoires, en général les accessoires tels que l'alternateur et la pompe à eau sont le plus souvent entraînés par une seconde poulie (8) sur l'axe de vilebrequin, engageant, par une courroie à adhérence (9), des poulies souvent de plus petit diamètre (10) et à inertie de rotation par conséquent plus sensibles aux pulsations de rotation.

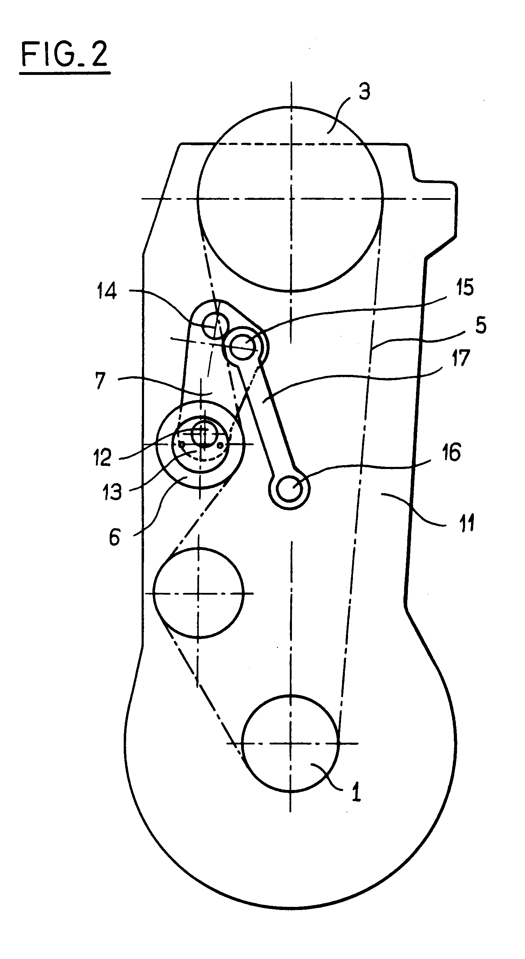

La figure 2 est une vue de face de la transmission synchrone présentée en figure 1, reliant la poulie menante (1) et la poulie menée (3) assurant l'engrènement avec la courroie ou lien souple (5) pressée par son dos lisse au moyen d'un galet (6) fixé par roulement à billes sur un levier (7). Celui-ci, apparemment fixé rigidement au carter ou à la face avant du bloc moteur (11), porte sur un axe lisse (12), bloqué par un dispositif vis-écrou, une came excentrique (13) qui porte la bague interne du roulement à billes ou à aiguilles, connu par ailleurs, sur lequel tourillonne le galet (6). Des ergots ou des trous percés sur la face de l'excentrique (13) permettent au montage, avec un outillage simple, d'exercer la tension nécessaire sur la courroie (5) par rotation autour de l'axe (12). Cette tension devient ainsi contrôlable par un outillage approprié, avec beaucoup plus de précision que dans l'art antérieur, quelle que soit la température du bloc-moteur.

En effet le levier (7) - apparemment fixé rigidement au bloc-moteur (11), ce qui évite toute possibilité de vibrations élastiques du fait du module très élevé de la courroie soumise à tension contrôlée -, présente comme point fixe un pivot (14), lisse ou tourillonnant sur un filetage, solidarisé à la face avant du bloc-moteur, par exemple par goujonnage dans un filetage. Un autre point fixe analogue est assuré par un axe (16) fixant une extremité du barreau compensateur (17). L'autre extrêmité de celui-ci tourillonne, de façon analogue à l'axe (14), sur le levier (17) par un troisième axe (15).

Ainsi les variations différentielles de longueur de l'entraxe (15-16) sont multipliées, pour le déplacement du galet (6) perpendiculairement à la courroie (5), dans le rapport des entraxes (12-14) et (14-15) sur le levier (7) ; celui-ci doit être suffisamment massif et en appui permanent de compression rattrapant tous les jeux éventuels des trois axes lisses, pour ne pas vibrer plus que s'il était fixé solidement au carter moteur (11).

Il en résulte que le rapport des entraxes n'a pas à dépasser 5 ou 6 pour un levier massif de longueur 1 décimètre, par exemple, dans le cas d'une transmission utilisant une courroie d'une longueur développée d'un mètre environ.

Des combinaisons courantes telles qu'un bloc moteur en aluminium avec des poulies en acier auront des ordres de grandeur analogues où le coefficient de dilatation thermique apparent de l'entraxe prendra une valeur intermédiaire entre $23.10^{-6}$/degré et $11.10^{-6}$/degré, valeur que l'on peut calculer avec précision en se basant sur la géométrie exacte de la transmission, le plus souvant grâce à un programme informatique de calcul.

Le rapport des bras de levier sera choisi, après avoir pris connaissance des valeurs réelles, pour compenser exactement la dilatation thermique, soit avec le coefficient réel du barreau compensateur (réalisé de façon industrielle, à un coût admissible, en tôle d'Invar emboutie) - ceci réalisant une tension constante à températures stabilisées - soit comme si la dilatation de cette qualité industrielle d'Invar était nulle - ce qui satisfait mieux une tension constante en régimes thermiques transitoires - sans nécessiter l'usage de qualités plus coûteuses, à coefficient de dilatation thermique encore plus réduit.

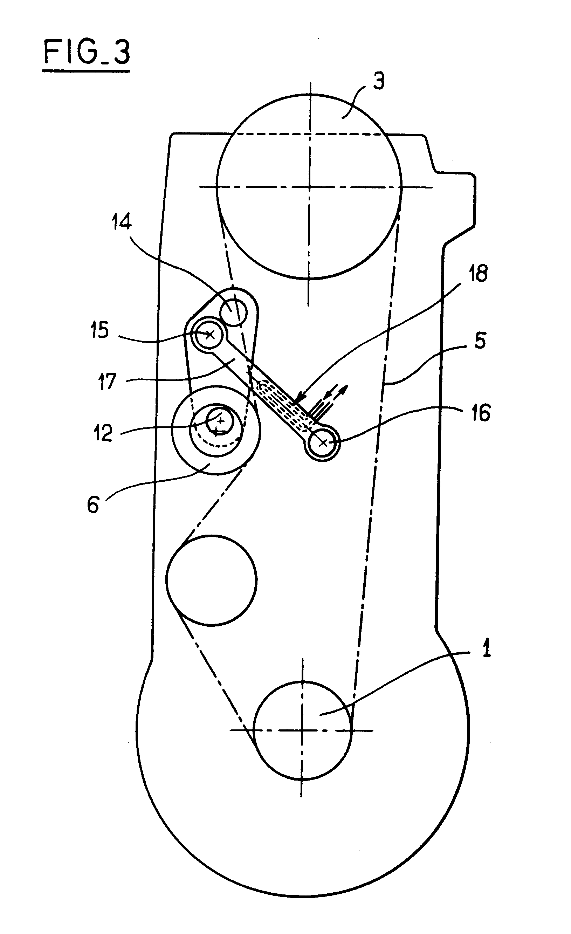

La figure 3 illustre, sous la même présentation, un variante du dispositif faisant usage d'un barreau compensateur à coefficient de dilatation thermique plus élevé que celui de l'entraxe, par exemple formé de métaux ferreux.

Pour des applications particulières, l'homme de l'art peut préférer compenser les variations de dilatation thermique par un barreau compensateur (17) réalisé par exemple en alliage d'aluminium, fixé de façon similaire entre un axe (16) sur le bloc-moteur et un troisième axe (15) tourillonnant sur le levier (7). Les dispositions relatives de celui-ci et du point fixe constitué par l'axe (14) doivent bien sûr être inversées, mais le calcul des bras de levier demeure le même.

Il sera possible, dans une certaine mesure, dans cette disposition, d'atteindre une nette amélioration des régimes transitoires, si le barreau compensateur (17) est en contact intime avec l'eau de refroidissement, ou mieux avec l'huile de lubrification. Dans des dispositions géométriques appropriées, le barreau compensateur (17) pourrait faire partie intégrante, comme support, d'un circuit de refroidissement de l'huile (18) et dans ce cas, ses dilatations thermiques pourraient même anticiper celles du carter-moteur, assurant ainsi la compensation aussi bien en régimes transitoires qu'en régime thermiquement stabilisé.

Bien entendu, l'homme de l'art pourra utiliser en tout ou en combinaison les dispositions et variantes sans sortir du cadre de l'invention.

L'invention présente, donc, l'avantage de résoudre les problèmes de bruit et de durée de vie limitée sur les moteurs à arbre à cames en tête et transmissions indexées de type analogue et d'éviter le saut de dent dynamique dans des conditions thermiques extrêmes, sans modifications du réglage, avec des tensions de courroie dont les limites de tolérances peuvent être plus facilement assurées. Elle autorise, par conséquent, l'usage de courroies plus rigides à la traction ou d'un coefficient de dilatation thermique très différent des coefficients de dilatation thermique moyens des poulies et du bloc moteur.

**Revendications**

1. Dispositif de compensation de la dilatation thermique sur un galet tendeur de transmission par lien souple ou articulé, comportant un levier (7) porteur du galet (6), fixe par rapport à l'entraxe des poulies (1) et (3) à température stabilisée, et la compensation des dilatations thermiques se faisant par rotation du levier (7) autour d'un pivot fixe (14), un troisième axe (15) du bras de levier prenant appui sur un barreau compensateur (17) caractérisé en ce que le levier (7) porte un palier (12) à excentrique de réglage (13), et en ce que le rapport du coefficient de dilatation thermique des matériaux portant l'entraxe des poulies à celui du matériau constitutif du barreau compensateur est au plus égal à 0,5 et en ce que le matériau constitutif du barreau compensateur présente un coefficient de dilatation thermique supérieur à celui des matériaux du support.

2. Dispositif de compensation de la dilatation thermique sur un galet tendeur de transmission par lien souple ou articulé, comportant un levier (7) porteur du galet (6), fixe par rapport à l'entraxe des poulies (1) et (3) à température stabilisée, et la compensation des dilatations thermiques se faisant par rotation du levier (7) autour d'un pivot fixe (14), un troisième axe (15) du bras de levier prenant appui sur un barreau compensateur (17) caractérisé en ce que le levier (7) porte un palier (12) à excentrique de réglage (13), en ce que le rapport du coefficient de dilatation thermique des matériaux portant l'entraxe des poulies à celui du matériau constitutif du barreau compensateur est au moins égal à 10, et en ce que le matériau constitutif du barreau compensateur (17) est un alliage fer-nickel à coefficient de dilatation thermique réduit.

3. Dispositif de compensation de la dilatation thermique selon la revendication 1 ou 2, caractérisé en ce que les rapports de bras de levier entre les trois axes du levier (7) ainsi que la longueur du barreau compensateur (17) sont calculés pour compenser exactement les dilatations en régime thermique stabilisé.

4. Dispositif de compensation de la dilatation thermique selon la revendication 1 ou 2, caractérisé en ce que les rapports des bras de levier entre les trois axes du levier (7) ainsi que la longueur du barreau compensateur (17) sont calculés pour compenser partiellement les dilatations en régime thermique stabilisé, le choix desdites dimensions étant limité par l'encombrement du système.

5. Dispositif de compensation de la dilatation thermique selon la revendication 2, caractérisé en ce que les rapports de bras de levier entre les trois axes du levier (7) ainsi que la longueur du barreau compensateur (17) sont calculés pour privilégier la compensation des dilatations en régime thermique transitoire où le coefficient de dilatation dudit barreau compensateur (17) est d'importance négligeable.

6. Dispositif de compensation de la dilatation thermique selon la revendication 1, caractérisé en ce que le barreau est mis en contact intime avec l'un des fluides de refroidissement du moteur tels que l'huile de lubrification et en ce qu'il travaille en traction permanente sous l'effet de la tension du lien souple.

**Claims**

1. A thermal expansion compensation device on a tensioning roller for a transmission using a flexible or articulated link, comprising a lever (7) carrying the roller (6), which is fixed relative to the centre distance of the pulleys (1) and (3) at a stabilised temperature, thermal expansion being compensated by the lever (7) being rotated around a fixed pivot (14), a third axle (15) of the lever arm being supported by a compensating bar (17), characterised in that the lever (7) carries a bearing (12) with an adjusting eccentric (13), and in that the ratio of the coefficient of thermal expansion of the materials making up the centre distance of the pulleys to that of the material constituting the compensating bar is at most equal to 0.5 and in that the material constituting the compensating bar has a coefficient of thermal expansion greater than that of the materials of the support.

2. A thermal expansion compensation device on a tensioning roller for a transmission using a flexible or articulated link, comprising a lever (7) carrying the roller (6), which is fixed relative to the centre distance of the pulleys (1) and (3) at a stabilised temperature, thermal expansion being compensated by the lever (7) being rotated around a fixed pivot (14), a third axle (15) of the lever arm being supported by a compensating bar (17), characterised in that the lever (7) carries a bearing (12) with an adjusting eccentric (13), and in that the ratio of the coefficient of thermal expansion of the materials making up the centre distance of the pulleys to that of the material constituting the compensating bar is at least equal to 10, and in that the material constituting the compensating bar (17) is an iron-nickel alloy with a low coefficient of thermal expansion.

3. A thermal expansion compensation device according to Claim 1 or 2, characterised in that the lever arm ratios between the three axles of the lever (7) as well as the length of the compensating bar (17) are calculated so as to compensate exactly for expansion in a stabilised thermal state.

4. A thermal expansion compensation device according to Claim 1 or 2, characterised in that the lever arm ratios between the three axles of the lever (7) as well as the length of the compensating bar (17) are calculated so as to compensate partly for expansion in a stabilised thermal state, the choice of said dimensions being limited by the overall dimensions of the system.

5. A thermal expansion compensation device according to Claim 2, characterised in that the lever arm ratios between the three axles of the lever (7) as well as the length of the compensating arm (17) are calculated so as to favour the compensation of expansion in a transitory thermal state where the coefficient of expansion of said compensating bar (17) has a negligible value.

6. A thermal expansion compensation device according to Claim 1, characterised in that the bar is placed in close contact with one of the cooling fluids of the engine such as lubricating oil and in that it works in constant traction under the effect of the tension of the flexible link.

**Patentansprüche**

1. Vorrichtung zum Ausgleichen der Wärmeausdehnung auf einer Riemenspannrolle einer Kraftübertragung mit einem biegsamen oder gelenkigen Riemen, bestehend aus einem die Rolle (6) tragenden Hebel (7), der in bezug auf den Achsabstand der Riemenscheiben (1) und (3) temperaturstabilisiert befestigt ist, wobei die Wärmeausdehnung durch Drehen des Hebels (7) um einen festen Drehpunkt (14) ausgeglichen wird, indem sich eine dritte Achse (15) des Hebelarms auf einem Ausgleichsstab (17) abstützt, dadurch gekennzeichnet, daß der Hebel (7) ein Lager (12) für eine Einstellexzenterscheibe (13) trägt und daß das Verhältnis des Wärmeausdehnungskoeffizienten der Materialien, die den Achsabstand der Riemenscheiben tragen, gegenüber dem Material, aus dem der Ausgleichsstab hergestellt ist, höchstens gleich 0,5 ist und daß das Material, aus dem der Ausgleichsstab hergestellt ist, einen höheren Wärmeausdehnungskoeffizienten als der des tragenden Materials aufweist.

2. Vorrichtung zum Ausgleichen der Wärmeausdehnung auf einer Riemenspannrolle einer Kraftübertragung mit einem biegsamen oder gelenkigen Riemen, bestehend aus einem die Rolle (6) tragenden Hebel (7), der in bezug auf den Achsabstand der Riemenscheiben (1) und (3) temperaturstabilisiert befestigt ist, wobei die Wärmeausdehnung durch Drehen des Hebels (7) um einen festen Drehpunkt (14) ausgeglichen wird, indem sich eine dritte Achse (15) des Hebelarms auf einem Ausgleichsstab (17) abstützt, dadurch gekennzeichnet, daß der Hebel (7) ein Lager (12) für eine Einstellexzenterscheibe (13) trägt und daß das Verhältnis des Wärmeausdehnungskoeffizienten der Materialien, die den Achsabstand der Riemenscheiben tragen, gegenüber dem Material, aus dem der Ausgleichsstab hergestellt ist, mindestens gleich 10 ist, und daß das Material, aus dem der Ausgleichsstab (17) hergestellt ist, eine Eisen-Nickel-Legierung mit einem reduzierten Wärmeausdehnungskoeffizienten ist.

3. Vorrichtung zum Ausgleichen der Wärmeausdehnung nach einem der Ansprüche 1 oder 2, dadurch gekennzeichnet, daß die Verhältnisse der Hebelarme zwischen den drei Achsen des Hebels (7) sowie die Länge des Ausgleichsstabes (17) für einen genauen Ausgleich der Wärmeausdehnungen im thermisch stabilisierten Bereich berechnet sind.

4. Vorrichtung zum Ausgleichen der Wärmeausdehnung nach einem der Ansprüche 1 oder 2, dadurch gekennzeichnet, daß die Verhältnisse der Hebelarme zwischen den drei Achsen des Hebels (7) sowie die Länge des Ausgleichsstabes (17) für einen teilweisen Ausgleich der Wärmeausdehnung im thermisch stabilisierten Bereich berechnet sind, wobei die Wahl der Dimensionen durch den Raumbedarf des Systems begrenzt sind.

5. Vorrichtung zum Ausgleichen der Wärmeausdehnung nach Anspruch 2, dadurch gekennzeichnet, daß die Verhältnisse der Hebelarme zwischen den drei Achsen des Hebels (7) sowie die Länge des Ausgleichsstabes (17) für einen bevorzugten Ausgleich der Wärmeausdehnung im thermischen Übergangsbereich, in dem der Wärmeausdehnungskoeffizient des Ausgleichsstabes (17) von vernachlässigbarer Bedeutung ist, berechnet sind.

6. Vorrichtung zum Ausgleichen der Wärmeausdehnung nach Anspruch 1, dadurch gekennzeichnet, daß der Stab in engen Kontakt mit einer der Kühlflüssigkeiten des Motors, wie das Schmieröl, gebracht ist und daß er unter der Wirkung der Spannung des biegsamen Riemens ständig unter Zug betrieben ist.

FIG_1

FIG. 2

# FIG_3